# EUROPÄISCHE PATENTSCHRIFT

(11) **EP 2 538 094 B1**
(45) Veröffentlichungstag und Bekanntmachung des Hinweises auf die Patenterteilung: **19.11.2014**
(21) Anmeldenummer: 12004559.6
(22) Anmeldetag: 18.06.2012
(51) Int. Cl.: F16B 45/02

(54) **Karabinerhaken**
Carabineer hook
Crochet de mousqueton

(30) Priorität: 24.06.2011 AT 9212011
(43) Veröffentlichungstag der Anmeldung: 26.12.2012
(73) Patentinhaber: ABA Hörtnagl GmbH, 6166 Fulpmes (AT)
(72) Erfinder: Hörtnagl, Andreas, 6166 Fulpmes (AT)
(74) Vertreter: Fechner, Thomas

(56) Entgegenhaltungen:
- WO-A1-95/19505
- WO-A1-2005/073571
- DE-U1- 9 102 003
- DE-U1- 29 610 293
- US-A1- 2011 023 275
- US-B1- 6 588 076

## Beschreibung

Die vorliegende Erfindung betrifft einen Karabinerhaken mit einem, zumindest eine Aufnahmeöffnung teilweise umschließenden Bügel und zumindest einem, am Bügel um ein Schließteilschwenkgelenk schwenkbar angeordnetes Schließteil zum Verschließen der Aufnahmeöffnung des Bügels in der Schließstellung des Schließteils, wobei die Aufnahmeöffnung in zumindest einer Offenstellung des Schließteils von außen zugänglich ist und der Karabinerhaken zusätzlich ein, verschiebbar auf oder an dem Schließteil gelagertes Sperrteil zum Arretieren des Schließteils in seiner Schließstellung aufweist.

Karabinerhaken sind in unterschiedlichsten Ausgestaltungsformen bekannt und werden auch in unterschiedlichsten Einsatzgebieten verwendet. Unter anderem sind hier der Bergsport, der Flugsport und auch die Arbeitssicherheit zu nennen. Oft ist es aus Sicherheitsgründen wichtig, dass das Schließteil nicht versehentlich aus seiner Schließstellung in eine seiner Offenstellungen geschwenkt werden kann. Hierzu gibt es beim Stand der Technik unterschiedliche Lösungen mit verschiedenartig ausgebildeten Sperrteilen, welche dazu dienen, das Schließteil in seiner Schließstellung zu arretieren. Gattungsgemäße Lösungen, wie sie, um ein Beispiel zu nennen, in der DE 296 10 293 U1 gezeigt sind, sind weit verbreitet. Bei dieser Lösung ist ein Sperrteil verschiebbar auf dem Schließteil angeordnet. Das Sperrteil hält in seiner Arretierstellung das Schließteils in dessen Schließstellung und verhindert dadurch ein Verschwenken des Schließteils in eine seiner Offenstellungen.

Aufgabe der Erfindung ist es, gattungsgemäße Karabinerhaken weiterzuentwickeln.

In diesem Zusammenhang ist gemäß der Erfindung vorgesehen, dass das Sperrteil zumindest in einer ersten Betriebsstellung mittels eines Sperrteilschwenkgelenks am Bügel schwenkbar gehalten ist.

Ein wesentlicher Gedanke der Erfindung ist es somit, zusätzlich zum Schließteilschwenkgelenk ein zweites Gelenk in Form des Sperrteilschwenkgelenks vorzusehen, mittels dem das Sperrteil in zumindest einer ersten Betriebsstellung schwenkbar am Bügel gehalten werden kann. Hierdurch können vor allem zwei Vorteile erreicht werden.

Zum Einen kann das Sperrteilschwenkgelenk dazu verwendet werden, das Sperrteil automatisch beim Betätigen des Schließteils auf diesem zu verschieben und/oder in einer zurückgeschobenen Stellung halten, wenn sich das Schließteil in einer Offenstellung befindet. Zum Anderen können erfindungsgemäße Ausgestaltungsformen aber auch dazu genutzt werden, um die benötigte Anzahl der elastischen Rückstellelemente zu reduzieren. So ist es z.B. möglich, dass der Karabinerhaken nur genau ein elastisches Rückstellelement zur Vorspannung des Schließteils in Richtung hin zu seiner Schließstellung und zur Vorspannung des Sperrteils in Richtung hin zu seiner Arretierstellung, in der das Sperrteil das Schließteil arretiert, aufweist. Bei diesen Ausgestaltungsformen spannt das elastische Rückstellelement somit sowohl das Schließteil als auch das Sperrteil vor. Auf separate Rückstellelemente für Schließteil und Sperrteil kann in diesen Ausgestaltungsformen verzichtet werden. Es ist aber auch darauf hinzuweisen, dass erfindungsgemäße Karabinerhaken auch mit je zumindest einem elastischen Rückstellelement für Schließteil und Sperrteil ausgerüstet sein können.

Besonders bevorzugte Ausgestaltungsformen der Erfindung sehen vor, dass das Sperrteilschwenkgelenk zumindest ein erstes, fix am Sperrteil angeordnetes Sperrteilschwenkgelenkteil und zumindest ein weiteres, fix am Bügel angeordnetes Sperrteilschwenkgelenkteil aufweist, wobei die Sperrteilschwenkgelenkteile in der ersten Betriebsstellung zur Ausbildung des Sperrteilschwenkgelenks schwenkbar aneinander gelagert sind und in zumindest einer weiteren Betriebsstellung, insbesondere in der Schließstellung des Schließteils, voneinander getrennt sind. Bei diesen Ausgestaltungsformen sind also auch Betriebsstellungen vorgesehen, bei denen die Sperrteilschwenkgelenkteile voneinander getrennt sind und das Sperrteil somit nicht mittels des Sperrteilschwenkgelenks am Bügel gehalten ist. So kann insbesondere vorgesehen sein, dass das Sperrteil, wenn es das Schließteil in der Schließstellung arretieren soll, nicht am Bügel schwenkbar gehalten ist. Hierdurch wird sichergestellt, dass der Benutzer des Karabinerhakens das Sperrteil zum Endarretieren des Schließteils zunächst bewusst betätigen muss und erst anschließend, wenn die Sperrteilschwenkgelenkteile ineinander greifen und schwenkbar aneinander gelagert sind, das Sperrteil automatisch zusammen mit dem Schließteil bewegt bzw. in geöffneter Stellung, in der es das Schließteil nicht arretiert, gehalten wird.

Besonders bevorzugte Ausgestaltungsformen der Erfindung sehen in diesem Zusammenhang vor, dass das Sperrteilschwenkgelenk zumindest ein erstes, fix am Sperrteil angeordnetes Sperrteilschwenkgelenkteil und zumindest ein weiteres, fix am Bügel angeordnetes Sperrteilschwenkgelenkteil aufweist, wobei eines der Sperrteilschwenkgelenkteile ein Achsbolzen und das andere der Sperrteilschwenkgelenkteile ein Achsbolzenlager zur drehbaren Lagerung des Achsbolzens aufweist oder ist.

In bevorzugten Ausgestaltungsformen ist das Sperrteil eine das Schließteil zumindest bereichsweise, vorzugsweise vollständig, umfassende Schiebehülse. In solchen Ausgestaltungsformen ist es günstig, wenn die Schiebehülse in der Schließstellung des Schließteils zur Arretierung des Schließteils auch ein Ende, vorzugsweise einen Endzapfen, des Bügels umfasst. Insbesondere in diesen Ausgestaltungsformen kann das Sperrteil zusätzlich zum Arretieren des Schließteils in seiner Schließstellung auch dazu verwendet werden, das Schließteil insgesamt zu stabilisieren.

Im Sinne einer kompakten nach außen hin möglichst geschlossenen Bauweise des Karabinerhakens sehen bevorzugte Ausgestaltungsformen der Erfindung vor, dass das, vorzugsweise als Schraubenfeder ausgebildete, elastische Rückstellelement in einem Innenraum des Sperrteils und/oder des Schließteils angeordnet ist. Das insbesondere als Schraubenfeder ausgebildete elastische Rückstellelement kann räumlich zwischen Sperrteil und Schließteil angeordnet sein und/oder auf Sperrteil und Schließteil einwirken. Besonders bevorzugte Ausgestaltungsformen sehen vor, dass das elastische Rückstellelement zwischen Sperrteil und Schließteil eingespannt ist. Das Schließteilschwenkgelenk weist günstigerweise eine permanent fix bzw. fest am Bügel angeordnete Schließteilschwenkgelenkachse auf, um die das Schließteil zwischen seiner Schließstellung und seiner Offenstellungen hin und her schwenkbar ist. Besonders bevorzugte Ausgestaltungsformen der Erfindung sehen vor, dass das Schließteil um eine Schließteilschwenkgelenkachse schwenkbar ist und das Sperrteil um eine Sperrteilschwenkgelenkachse schwenkbar ist und die Schließteilschwenkgelenkachse und die Sperrteilschwenkgelenkachse in zumindest einer Betriebsstellung, vorzugsweise in allen Betriebsstellungen, voneinander distanziert angeordnet sind. Die Sperrteilschwenkgelenkachse ist in diesen Ausgestaltungsformen mit anderen Worten somit exzentrisch bezüglich der Schließteilschwenkgelenkachse angeordnet. Besonders bevorzugte Ausgestaltungsformen sehen in diesem Zusammenhang vor, dass die Sperrteilschwenkgelenkachse auf einer von der Aufnahmeöffnung abgewandten Seite der Schließteilschwenkgelenkachse angeordnet ist. Der Vollständigkeit halber wird darauf hingewiesen, dass unter einer distanzierten Anordnung eine Anordnung mit einem Abstand größer Null verstanden wird.

Weitere Merkmale und Einzelheiten bevorzugter Ausgestaltungsformen der Erfindung werden anhand der nachfolgenden Figurenbeschreibung erläutert. In dieser zeigen:
Fig. 1 bis 8 verschiedene Darstellungen zu einem ersten Ausführungsbeispiel der Erfindung;
Fig. 9 bis 18 verschiedene Darstellungen zu einem zweiten erfindungsgemäßen Ausführungsbeispiel eines Karabinerhakens.

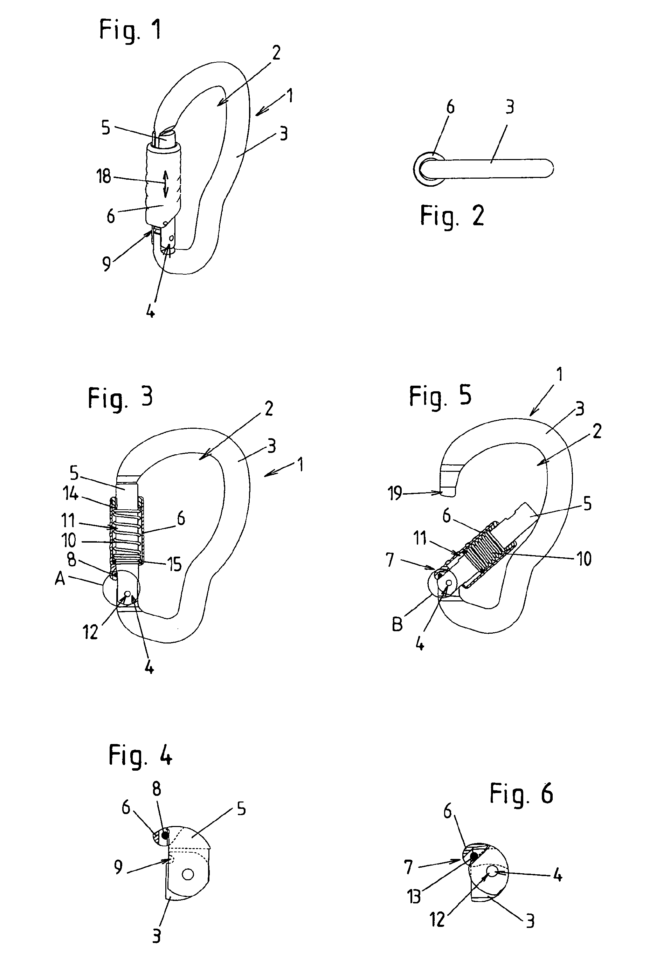

In Fig. 1 ist der erfindungsgemäße Karabinerhaken 1 des ersten Ausführungsbeispiels in einer perspektivischen Darstellung abgebildet. Zu sehen ist der Bügel 3, an welchem mittels des Schließteilschwenkgelenks 4 das Schließteil 5 um die Schließteilschwenkgelenkachse 12 schwenkbar gelagert ist. In Fig. 1 befindet sich das Schließteil 5 in seiner Schließstellung, in der es gemeinsam mit dem Bügel 3 die Aufnahmeöffnung 2 umfangsgeschlossen umfasst. Um eine Schlaufe, ein Seil oder dergleichen in die Aufnahmeöffnung 2 einführen zu können, muss das Schließteil 5 in eine seiner Offenstellungen um die Schließteilschwenkgelenkachse 12 herumgeschwenkt werden. Hierzu muss zunächst vom Bediener des Karabinerhakens 1 das hier als Schiebehülse ausgebildete Sperrteil 6 aus seiner Arretierstellung gemäß Fig. 1 verschoben werden. Das Sperrteil 6 ist hierzu verschiebbar auf oder an dem Schließteil 5 gelagert, bzw. in anderen Worten in den Längsrichtungen 18 des Schließteils 5 an oder auf diesem verschiebbar gelagert. In der Arretierstellung gemäß Fig. 1 und 3 arretiert bzw. blockiert das Sperrteil 6 das Schließteil 5 in seiner Schließstellung und verhindert somit ein ungewolltes Aufschwenken des Schließteils 5 in eine seiner Offenstellungen.

Fig. 2 zeigt eine Draufsicht von oben auf den Karabinerhaken 1 gemäß Fig. 1. Fig. 3 zeigt eine Seitenansicht auf den Karabinerhaken 1, wobei das Sperrteil 6 geschnitten dargestellt ist. In Fig. 3 befindet sich das Sperrteil 6 in seiner Arretierstellung, in der es das Schließteil 5 in dessen Schließstellung hält. In Fig. 5 handelt es sich um eine analoge Darstellung, allerdings befindet sich das Schließteil 5 hier in seiner maximal geöffneten Stellung. Das Sperrteil 6 wird in Fig. 5 vom Sperrteilschwenkgelenk 7 in einer zurückgezogenen Position gehalten.

Wie insbesondere in den Fig. 3 und 5 zu sehen, wirkt ein elastisches Rückstellelement 10, hier in Form einer Schraubenfeder, in diesem Ausführungsbeispiel sowohl auf das Sperrteil 6 als auch auf das Schließteil 5 ein. Es ist zwischen einer oberen Stützschulter 14 und einer unteren Stützschulter 15 eingespannt. Die obere Stützschulter 14 ist mit dem Sperrteil 6 fix verbunden. Die untere Stützschulter 15 ist fix am Schließteil 5 befestigt. Durch diese hier beispielhaft gezeigte Ausgestaltungsform wird erreicht, dass der gesamte Karabinerhaken 1 mit nur einem einzigen elastischen Rückstellelement 10 zur Vorspannung bzw. Rückstellung des Schließteils 5 in seine Schließstellung gemäß Fig. 1 und 3 und zur Vorspannung bzw. Rückstellung des Schließteils 6 in Richtung hin zu seiner Arretierstellung gemäß Fig. 1 und 3 auskommt.

Im ersten Ausführungsbeispiel ist das elastische Rückstellelement 10 um das Schließteil 5 herumgeführt und in einem Innenraum 11 des Sperrteils 6 angeordnet.

Erfindungsgemäß ist das Sperrteil 6 zumindest in einer ersten Betriebsstellung, hier beispielhaft die Betriebsstellung gemäß Fig. 5, mittels des Sperrteilschwenkgelenks 7 am Bügel 3 schwenkbar gehalten. Das Sperrteilschwenkgelenk 7 wird im gezeigten Ausführungsbeispiel durch ein erstes Sperrteilschwenkgelenkteil in Form eines Achsbolzens 8 und eines weiteren Sperrteilschwenkgelenkteils 9 in Form eines Achsbolzenlagers zur drehbaren Lagerung des Achsbolzens gebildet. Im gezeigten Ausführungsbeispiel gemäß der Fig. 1 bis 8 ist das erste Sperrteilschwenkgelenkteil 8 in Form des Achsbolzens am Sperrteil 6 fixiert. Das weitere Sperrteilschwenkgelenkteil 9 in Form des Achsbolzenlagers ist in diesem Ausführungsbeispiel am Bügel 3 fix angeordnet. Dies muss aber nicht so sein, eine umgekehrte Ausgestaltungsform ist, um ein Beispiel zu nennen, auch möglich. Bei einer solchen kann das Sperrteilschwenkgelenkteil 8 in Form des Achsbolzens auch am Bügel 3 und das weitere Sperrteilschwenkgelenkteil 9 in Form des Achsbolzenlagers auch am Sperrteil 6 angeordnet sein.

Fig. 4 zeigt den Bereich A aus Fig. 3 vergrößert. Fig. 6 zeigt den Bereich B aus Fig. 5 vergrößert. Besonders wenn man die Fig. 4 und 6 miteinander vergleicht, ist zu sehen, dass bei diesem Ausführungsbeispiel die beiden Sperrteilschwenkgelenkteile 8 und 9 nicht permanent miteinander in Eingriff stehen, sondern das Sperrteilschwenkgelenk 7 nur in bestimmten Betriebsstellungen als Gelenk wirkt. In der Schließstellung des Schließteils 5 gemäß der Fig. 1, 3 und 4 greifen die beiden Sperrteilschwenkgelenkteile 8 und 9 nicht ineinander ein, in der Offenstellung des Schließteils 5 gemäß Fig. 5 und 6 schon.

Will nun der Benutzer des Karabinerhakens 1 das Schließteil 5 aus seiner in den Fig. 1 und 3 dargestellten Schließstellung in eine Offenstellung schwenken, so muss er zunächst die Arretierung mittels des Sperrteils 6 lösen. Hierzu muss er von Hand das Sperrteil 6 auf dem Schließteil 5 in Richtung hin zum Schließteilschwenkgelenk 4 schieben und zwar so weit, bis das Sperrteil 6 so weit zurückgeschoben ist, dass es den Endzapfen 19 des Bügels 3 freigibt. Erst ab dieser Stellung kann das Schließteil 5 aus seiner Schließstellung herausgeschwenkt werden. Ist das Sperrteil 6 so weit nach hinten geschoben, dass es den Endzapfen 19 des Bügels 3 freigibt, so kommt beim Verschwenken des Schließteils 5 in Richtung hin zu seiner maximalen Offenstellung gemäß Fig. 5 das erste Sperrteilschwenkgelenkteil 8 in Form des Achsbolzens automatisch in Eingriff mit dem weiteren Sperrteilschwenkgelenkteil 9 in Form des Achsbolzenlagers, sodass ab dieser Betriebsstellung das Sperrteilschwenkgelenk 7 als solches ausgebildet ist und wirkt. Beim weiteren Verschwenken des Schließteils 5 in Richtung hin zu seiner maximalen Offenstellung gemäß Fig. 5 hält das Sperrteilschwenkgelenk 7 dann das Sperrteil 6 automatisch in einer zurückgezogenen Stellung bzw. zieht dies noch weiter nach hinten in Richtung des Schließteilschwenkgelenks 4. Der Vollständigkeit halber wird darauf hingewiesen, dass das Schließteil 5 natürlich nicht immer in seine maximal geöffnete Stellung gemäß Fig. 5 geschwenkt werden muss.

Lässt der Benutzer des Karabinerhakens 1 nun in einer Offenstellung das Schließteil 5 und das Sperrteil 6 los, so sorgt das unter Spannung stehende elastische Rückstellelement 10 sowohl für die Rückstellung des Schließteils 5 in seine Schließstellung als auch des Sperrteils 6 in seine Arretierungsstellung. Bei dieser Rückbewegung hält das Sperrteilschwenkgelenk 7 das Sperrteil 6 so lange zurück, so lange die beiden Sperrteilschwenkgelenkteile 8 und 9 ineinander in Eingriff stehen. Dies ermöglicht es, dass das Schließteil 5 zuerst in seine Schließstellung zurückfindet, bevor das erste Sperrteilschwenkgelenkteil 8 vom weiteren Sperrteilschwenkgelenkteil 9 freigegeben wird und das Sperrteil 6 vom elastischen Rückstellelement 10 in seine Arretierstellung gemäß Fig. 3, in der es das Schließteil 5 wieder in seiner Schließstellung arretiert, zurückgeschoben wird.

Insbesondere in den Fig. 5 und 6 ist gut zu sehen, dass die Schließteilschwenkgelenkachse 12 und die Sperrteilschwenkgelenkachse 13 voneinander distanziert angeordnet sind. Besonders bevorzugt ist dabei, wie eingangs bereits erläutert, vorgesehen, dass die Sperrteilschwenkgelenkachse 13 auf einer von der Aufnahmeöffnung 2 abgewandten Seite der Schließteilschwenkgelenkachse 12 angeordnet ist.

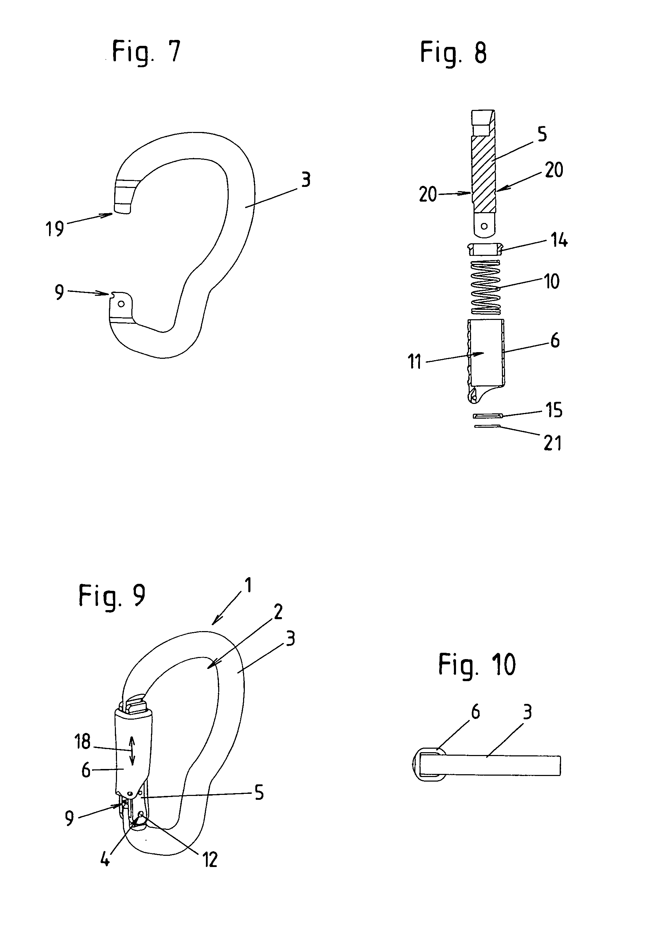

Fig. 7 zeigt in einer Seitenansicht den in dieser Form ansatzweise C-förmig gebogenen Bügel 3 mit seinem an einem Ende angeordneten Endzapfen 19 und seinem am gegenüberliegenden Ende angeordneten Schwenkgelenkteil 9. Fig. 8 zeigt in einer Explosionsdarstellung und teilweise in einem Längsschnitt das Schließteil 5, die fix am ebenfalls dargestellten Sperrteil 6 zu befestigende obere Stützschulter 14, das elastische Rückstellelement 10, sowie die untere Stützschulter 15, welche mittels der Befestigungsnut 20 und dem Klemmring 21 am Schließteil 5 fixiert wird.

Das zweite Ausführungsbeispiel gemäß der Fig. 9 bis 18 unterscheidet sich im Wesentlichen nur in der Ausgestaltung des Schließteils 5 und des Sperrteils 6 vom ersten Ausführungsbeispiel. Im Folgenden wird nur noch auf die Unterschiede zum ersten Ausführungsbeispiel eingegangen. Bezüglich aller anderen Merkmale und insbesondere der erfindungsgemäßen Funktion des Sperrteilschwenkgelenks 7 wird auf die bisherigen Ausführungen zum ersten Ausführungsbeispiel verwiesen. Die Fig. 1 bis 7 des ersten Ausführungsbeispiels finden ihre jeweilige Entsprechung in den Fig. 9 bis 15 des zweiten Ausführungsbeispiels.

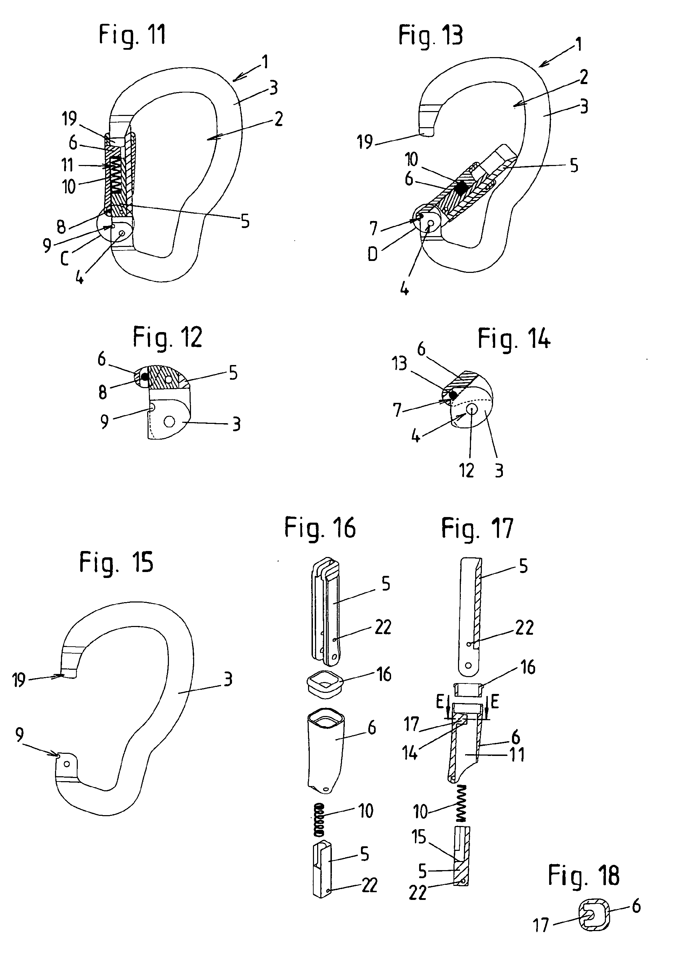

Anstelle des in dem ersten Ausführungsbeispiel massiv und einstückig ausgebildeten Schließteils 5 ist das Schließteil 5 des zweiten Ausführungsbeispiels zweiteilig aufgebaut, wie dies besonders gut in den Explosionsdarstellungen gemäß Fig. 16 und 17 zu sehen ist. In Fig. 16 handelt es sich um eine perspektivische Explosionsdarstellung. Fig. 17 zeigt einen Längsschnitt als Explosionsdarstellung. Fig. 18 zeigt in Draufsicht den Schnitt entlang der Schnittebene EE aus Fig. 17.

Der in den Fig. 16 und 17 ganz oben gezeigte Teil des Schließteils 5 ist in diesem Ausführungsbeispiel als Blechbiegeteil gezeigt. In dieses Blechbiegeteil kann der zweite Teil des Schließteils 5, welcher in den Fig. 16 und 17 jeweils unten dargestellt ist, eingeschoben und mittels der Befestigungslöcher 22 fixiert werden. Das Sperrteil 6 ist in diesem Ausführungsbeispiel ebenfalls als eine Schiebehülse, welche in Längsrichtung 18 auf dem Schließteil 5 verschiebbar gelagert ist, geführt. Zusätzlich zu seiner Arretierungsfunktion dient das Sperrteil 6 in dieser Ausgestaltungsform auch noch als eine Stabilisierungsmanschette für das Schließteil 5. In diesem Sinne kann somit vorgesehen sein, dass das Schließteil 5 zumindest bereichsweise als Blechbiegeteil ausgebildet ist und das Blechbiegeteil zu seiner Stabilisierung vom Sperrteil 6 umgriffen ist. Im Inneren 11 des Sperrteils 6 dieses zweiten Ausführungsbeispiels befindet sich ein Vorsprung 17, welcher die obere Stützschulter 14 für das elastische Rückstellelement 10 darstellt. Die untere Stützschulter 15 befindet sich in diesem Ausführungsbeispiel am unteren Teil des Schließteils 5. Dies ist beides besonders gut in der Längsschnittexplosionsdarstellung gemäß Fig. 17 zu sehen. Das hier ebenfalls als Feder ausgebildete elastische Rückstellelement 10 ist auch in diesem Ausführungsbeispiel zwischen dem Schließteil 5 und dem Sperrteil 6 angeordnet und wirkt auch zwischen diesen beiden Bauteilen. Auch dieses Ausführungsbeispiel kommt mit einem einzigen elastischen Rückstellelement 10 zur Vorspannung sowohl des Schließteils 5 in Richtung hin zu seiner Schließstellung als auch des Sperrteils 6 in Richtung hin zu seiner Arretierungsstellung aus. Der obere Abschluss 16 dient in diesem Ausführungsbeispiel lediglich als Stabilisierungstell für das oben genannte Blechbiegeteil und ist daher vorzugsweise aus Metall hergestellt. Dies ermöglicht es, das restliche Sperrteil 6 aus einem weniger stabilen Werkstoff wie z.B. Kunststoff auszubilden. Die Funktionsweise des Sperrteils 6 und insbesondere des Sperrteilschwenkgelenks 7 dieses zweiten Ausführungsbeispiels entspricht der Wirkungsweise, wie sie beim ersten Ausführungsbeispiel geschildert worden ist und muss hier daher nicht noch einmal erläutert werden.

### Legende

### zu den Hinweisziffern:

- 1: Karabinerhaken
- 2: Aufnahmeöffnung
- 3: Bügel
- 4: Schließteilschwenkgelenk
- 5: Schließteil
- 6: Sperrteil
- 7: Sperrteilschwenkgelenk
- 8: erstes Sperrteilschwenkgelenkteil
- 9: zweites Sperrteilschwenkgelenkteil
- 10: elastisches Rückstellelement
- 11: Innenraum
- 12: Schließteilschwenkgelenkachse
- 13: Sperrteilschwenkgelenkachse
- 14: obere Stützschulter
- 15: untere Stützschulter
- 16: oberer Abschluss
- 17: Vorsprung
- 18: Längsrichtung
- 19: Endzapfen
- 20: Befestigungsnut
- 21: Klemmring
- 22: Befestigungslöcher

## Patentansprüche

1. Karabinerhaken (1) mit einem, zumindest eine Aufnahmeöffnung (2) teilweise umschließenden Bügel (3) und zumindest einem, am Bügel (3) um ein Schließteilschwenkgelenk (4) schwenkbar angeordnetes Schließteil (5) zum Verschließen der Aufnahmeöffnung (2) des Bügels (3) in der Schließstellung des Schließteils (5), wobei die Aufnahmeöffnung (2) in zumindest einer Offenstellung des Schließteils (5) von außen zugänglich ist und der Karabinerhaken (1) zusätzlich ein, verschiebbar auf oder an dem Schließteil (5) gelagertes Sperrteil (6) zum Arretieren des Schließteils (5) in seiner Schließstellung aufweist, **dadurch gekennzeichnet, dass** das Sperrteil (6) zumindest in einer ersten Betriebsstellung mittels eines Sperrteilschwenkgelenks (7) am Bügel (3) schwenkbar gehalten ist.

2. Karabinerhaken (1) nach Anspruch 1, **dadurch gekennzeichnet, dass** das Sperrteilschwenkgelenk (7) zumindest ein erstes, fix am Sperrteil (6) angeordnetes Sperrteilschwenkgelenkteil (8) und zumindest ein weiteres, fix am Bügel (3) angeordnetes Sperrteilschwenkgelenkteil (9) aufweist, wobei die Sperrteilschwenkgelenkteile (8, 9) in der ersten Betriebsstellung zur Ausbildung des Sperrteilschwenkgelenks (7) schwenkbar aneinander gelagert sind und in zumindest einer weiteren Betriebsstellung, insbesondere in der Schließstellung des Schließteils (5), voneinander getrennt sind.

3. Karabinerhaken (1) nach Anspruch 1 oder 2, **dadurch gekennzeichnet, dass** das Sperrteilschwenkgelenk (7) zumindest ein erstes, fix am Sperrteil (6) angeordnetes Sperrteilschwenkgelenkteil (8) und zumindest ein weiteres, fix am Bügel (3) angeordnetes Sperrteilschwenkgelenkteil (9) aufweist, wobei eines der Sperrteilschwenkgelenkteile (8, 9) ein Achsbolzen und das andere der Sperrteilschwenkgelenkteile (8, 9) ein Achsbolzenlager zur drehbaren Lagerung des Achsbolzens aufweist oder ist.

4. Karabinerhaken (1) nach einem der Ansprüche 1 bis 3, **dadurch gekennzeichnet, dass** das Sperrteil (6) eine, das Schließteil (5) zumindest bereichsweise, vorzugsweise vollständig, umfassende Schiebehülse ist, und/oder dass das Schließteil (5) zumindest bereichsweise als Blechbiegeteil ausgebildet ist und das Blechbiegeteil zu seiner Stabilisierung vom Sperrteil (6) umgriffen ist.

5. Karabinerhaken (1) nach einem der Ansprüche 1 bis 4, **dadurch gekennzeichnet, dass** der Karabinerhaken (1) zumindest ein, vorzugsweise genau ein, elastisches Rückstellelement (10) zur Vorspannung des Schließteils (5) in Richtung hin zu seiner Schließstellung und/oder zur Vorspannung des Sperrteils (6) in Richtung hin zu seiner Arretierstellung, in der das Sperrteil (6) das Schließteil (5) arretiert, aufweist.

6. Karabinerhaken (1) nach Anspruch 5, **dadurch gekennzeichnet, dass** das, vorzugsweise als Schraubenfeder ausgebildete, elastische Rückstellelement (10) in einem Innenraum (11) des Sperrteils (6) und/oder des Schließteils (5) angeordnet ist.

7. Karabinerhaken (1) nach Anspruch 5 oder 6, **dadurch gekennzeichnet, dass** das, vorzugsweise als Schraubenfeder ausgebildete, elastische Rückstellelement (10) zwischen Sperrteil (6) und Schließteil (5) angeordnet ist und/oder auf Sperrteil (6) und Schließteil (5) einwirkt.

8. Karabinerhaken (1) nach einem der Ansprüche 1 bis 7, **dadurch gekennzeichnet, dass** das Schließteilschwenkgelenk (4) eine permanent am Bügel (3) feste Schließteilschwenkgelenkachse (12) aufweist, um die das Schließteil (5) schwenkbar ist.

9. Karabinerhaken (1) nach einem der Ansprüche 1 bis 8, **dadurch gekennzeichnet, dass** das Schließteil (5) um eine Schließteilschwenkgelenkachse (12) schwenkbar ist und das Sperrteil (6) um eine Sperrteilschwenkgelenkachse (13) schwenkbar ist und die Schließteilschwenkgelenkachse (12) und die Sperrteilschwenkgelenkachse (13) in zumindest einer Betriebsstellung, vorzugsweise in allen Betriebsstellungen, voneinander distanziert angeordnet sind.

10. Karabinerhaken (1) nach Anspruch 9, **dadurch gekennzeichnet, dass** die Sperrteilschwenkgelenkachse (13) auf einer von der Aufnahmeöffnung (2) abgewandten Seite der Schließteilschwenkgelenkachse (12) angeordnet ist.

## Claims

1. A carabiner (1) having a loop (3), partially enclosing at least one receiving opening (2), and at least one closing part (5), arranged on the loop (3) so as to be pivotable about a closing part pivot joint (4), for closing the receiving opening (2) of the loop (3) in the closing position of the closing part (5), wherein the receiving opening (2) is accessible from the exterior in at least one open position of the closing part (5) and the carabiner (1) additionally has a locking part (6), displaceably mounted on or against the closing part (5), for fixing the closing part (5) in its closing position, **characterized in that** at least in a first operating position, the locking part (6) is pivotably held on the loop (3) by means of a locking part pivot joint (7).

2. A carabiner (1) according to claim 1, **characterized in that** the locking part pivot joint (7) has at least a first locking part pivot joint part (8) fixedly arranged on the locking part (6) and at least another locking part pivot joint part (9) fixedly arranged on the loop (3), wherein the locking part pivot joint parts (8, 9) are in the first operating position pivotably mounted on one another to form the locking part pivot joint (7) and are separated from one another in at least another operating position, in particular in the closing position of the closing part (5).

3. A carabiner (1) according to claim 1 or 2, **characterized in that** the locking part pivot joint (7) has at least a first locking part pivot joint part (8) fixedly arranged on the locking part (6) and at least another locking part pivot joint part (9) fixedly arranged on the loop (3), wherein one of the locking part pivot joint parts (8, 9) has or is a pivot pin and the other of the locking part pivot joint parts (8, 9) has or is a pivot pin bearing for the rotatable mounting of the pivot pin.

4. A carabiner (1) according to any one of claims 1 to 3, **characterized in that** the locking part (6) is a sliding sleeve surrounding the closing part (5) at least partially, preferably fully, and/or **in that** the closing part (5) is at least partially in the form of a sheet-metal bending part and the locking part (6) grips around the sheet-metal bending part for stabilization of the latter.

5. A carabiner (1) according to any one of claims 1 to 4, **characterized in that** the carabiner (1) has at least one, preferably exactly one, resilient restoring element (10) for preloading of the closing part (5) towards its closing position and/or for preloading of the locking part (6) towards its fixing position in which the locking part (6) fixes the closing part (5) in position.

6. A carabiner (1) according to claim 5, **characterized in that** the resilient restoring element (10), preferably in the form of a helical spring, is arranged in an interior (11) of the locking part (6) and/or of the closing part (5).

7. A carabiner (1) according to claim 5 or 6, **characterized in that** the resilient restoring element (10), preferably in the form of a helical spring, is arranged between the locking part (6) and the closing part (5) and/or acts upon the locking part (6) and the closing part (5).

8. A carabiner (1) according to any one of claims 1 to 7, **characterized in that** the closing part pivot joint (4) has a closing part pivot joint spindle (12), permanently fixed on the loop (3), about which the closing part (5) is pivotable.

9. A carabiner (1) according to any one of claims 1 to 8, **characterized in that** the closing part (5) is pivotable about a closing part pivot joint spindle (12) and the locking part (6) is pivotable about a locking part pivot joint spindle (13) and the closing part pivot joint spindle (12) and the locking part pivot joint spindle (13) are arranged distanced from one another in at least one operating position, preferably in all operating positions.

10. A carabiner (1) according to claim 9, **characterized in that** the locking part pivot joint spindle (13) is arranged on a side of the closing part pivot joint spindle (12) remote from the receiving opening (2).

## Revendications

1. Crochet de mousqueton (1) comportant un étrier (3) entourant partiellement au moins une ouverture de réception (2) et au moins une pièce de fermeture (5) montée pivotante sur l'étrier (3) autour d'une articulation (4) pour permettre la fermeture de l'ouverture de réception (2) de l'étrier (3) dans la position de fermeture de la pièce de fermeture (5), l'ouverture de réception (2) étant accessible de l'extérieur dans au moins une position d'ouverture de la pièce de fermeture (5), et le crochet de mousqueton (1) comportant en outre une pièce de blocage (6) montée mobile en translation sur ou dans la pièce de fermeture (5) pour bloquer la pièce de fermeture (5) dans sa position de fermeture,
**caractérisé en ce que**
la pièce de blocage (6) est maintenue pivotante sur l'étrier (3) au moins dans une première position de fonctionnement au moyen d'une articulation (7) de cette pièce de blocage.

2. Crochet de mousqueton (1) conforme à la revendication 1,
**caractérisé en ce que**
l'articulation (7) de la pièce de blocage comporte au moins une première pièce d'articulation (8) de la pièce de blocage montée fixe sur la pièce de blocage (6) et au moins une autre pièce d'articulation (9) de la pièce de blocage montée fixe sur l'étrier (3), les pièces d'articulation (8, 9) de la pièce de blocage étant montées mobiles en pivotement l'une par rapport à l'autre dans la première position de fonctionnement pour former l'articulation de la pièce de blocage (7), et étant séparées l'une de l'autre dans au moins une autre position de fonctionnement, en particulier dans la position de fermeture de la pièce de fermeture (5).

3. Crochet de mousqueton (1) conforme à la revendication 1 ou 2,
**caractérisé en ce que**
l'articulation (7) de la pièce de blocage comporte au moins une première pièce d'articulation (8) de la pièce de blocage montée fixe sur la pièce de blocage (6) et au moins une autre pièce d'articulation (9) de la pièce de blocage montée fixe sur l'étrier (3), l'une des pièces d'articulation (8, 9) de la pièce de blocage comportant ou étant constitue par une broche tandis que l'autre pièce d'articulation (8, 9) de la pièce de blocage comporte ou est constituée par un palier de broche pour permettre le montage mobile en rotation de la broche.

4. Crochet de mousqueton (1) conforme à l'une des revendications 1 à 3,
**caractérisé en ce que**
la pièce de blocage (6) est constituée par un manchon coulissant entourant la pièce de fermeture (5) au moins partiellement ou de préférence dans sa totalité et/ou la pièce de fermeture (5) est formée au moins par segments sous la forme d'une pièce cintrée en tôle et cette pièce cintrée en tôle est entourée par la pièce de blocage (6) pour permettre sa stabilisation.

5. Crochet de mousqueton (1) conforme à l'une des revendications 1 à 4,
**caractérisé en ce qu'**
il comporte au moins un et de préférence exactement un élément de rappel élastique (10) pour permettre de précontraindre la pièce de fermeture (5) dans la direction de sa position de fermeture et/ou pour permettre de précontraindre la pièce de blocage (6) dans la direction de sa position de blocage dans laquelle la pièce de blocage (6) bloque la pièce de fermeture (5).

6. Crochet de mousqueton (1) conforme à la revendication 5,
**caractérisé en ce que**
l'élément de rappel élastique (10) réalisé de préférence sous la forme d'un ressort hélicoïdal est monté dans un volume interne (11) de la pièce de blocage (6) et/ ou de la pièce de fermeture (5).

7. Crochet de mousqueton (1) conforme à la revendication 5 ou 6,
**caractérisé en ce que**
l'élément de rappel élastique (10) de préférence réalisé sous la forme d'un ressort hélicoïdal est monté entre la pièce de blocage (6) et la pièce de fermeture (5) ou agit sur la pièce de blocage (6) et sur la pièce de fermeture (5).

8. Crochet de mousqueton (1) conforme à l'une des revendications 1 à 7,
**caractérisé en ce que**
l'articulation (4) de la pièce de fermeture comporte un axe d'articulation (12) de la pièce de fermeture fixé en permanence sur l'étrier (3) autour du quel peut pivoter la pièce de fermeture (5).

9. Crochet de mousqueton (1) conforme à l'une des revendications 1 à 8,
**caractérisé en ce que**
la pièce de fermeture (5) peut pivoter autour d'un axe d'articulation (12) de la pièce de fermeture et la pièce de blocage (6) peut pivoter autour d'un axe d'articulation (13) de la pièce de blocage, et l'axe d'articulation (12) de la pièce de fermeture et l'axe d'articulation (13) de la pièce de blocage sont situés à distance l'un de l'autre dans au moins une position de fonctionnement et de préférence dans toutes les positions de fonctionnement.

10. Crochet de mousqueton (1) conforme à la revendication 9,
**caractérisé en ce que**
l'axe d'articulation (13) de la pièce de blocage est monté sur un côté de l'axe d'articulation (12) de la pièce de fermeture située à l'opposé de l'ouverture de réception (2).
